# EUROPEAN PATENT APPLICATION

(11) **EP 1 905 622 A1**
(43) Date of publication of application: **02.04.2008**
(21) Application number: 06425659.7
(22) Date of filing: 26.09.2006
(51) Int. Cl.: B60H 1/00

(54) **Air distribution assembly for vehicles**

(71) Applicant: DENSO THERMAL SYSTEMS S.p.A., 10046 Poirino (Torino) (IT)
(72) Inventor: Ferrarese, Claudio, Denso Thermal Systems Spa, 10046 Poirino (Torino) (IT)
(74) Representative: Marchitelli, Mauro

(57) **Abstract**

An air distribution assembly for vehicles, comprising:
- a case (12) having a first opening (14) and two second openings (16) for the exit of the air flow, and
- a valve element (18) arranged to open and close said openings selectively.

The valve element comprises a single body, rotatable relative to the case (12) around an axis (20) and having a central wall (22) (positioned to open and close the passage of the air flow through the first opening 14) and two cylindrical sectors (24) positioned at opposite sides of said central wall (22) and arranged to open and close the passage of the air flow through said second openings (16). The cylindrical sectors (24) are provided with first and second openings (32, 34) arranged in respective planes converging on said axis of rotation (20) and forming an acute angle between them.

## Description

The present invention relates to an air distribution assembly for vehicles. In particular, the invention relates to the part of an air distribution assembly able to distribute the air flow towards the base of the front glass of the vehicle and towards the central and lateral frontal nozzles of the dashboard.

The object of the present invention is to provide an air distribution assembly that is particularly simple and with a reduced number of components and that is readily adaptable to different vehicle models.

According to the present invention, said object is achieved by an air distribution assembly having the characteristics set out in claim 1.

The present invention shall now be described in detail with reference to the accompanying drawings, provided purely by way of non limiting example, in which:
- Figures 1 and 2 are schematic perspective views of a part of an air distribution assembly according to the present invention in two operative positions,,
- Figure 3 is a perspective view of a part of the case of the air distribution assembly according to the present invention,
- Figures 4 and 5 are perspective views showing the valve element of the distribution assembly according to the present invention in two operative positions,
- Figures 6 and 7 are perspective views showing two versions of air distribution conduits for an assembly according to the present invention, and
- Figures 8 and 9 are schematic perspective views showing two air distribution assemblies according to the invention with the distribution conduits shown in Figures 6 and 7.

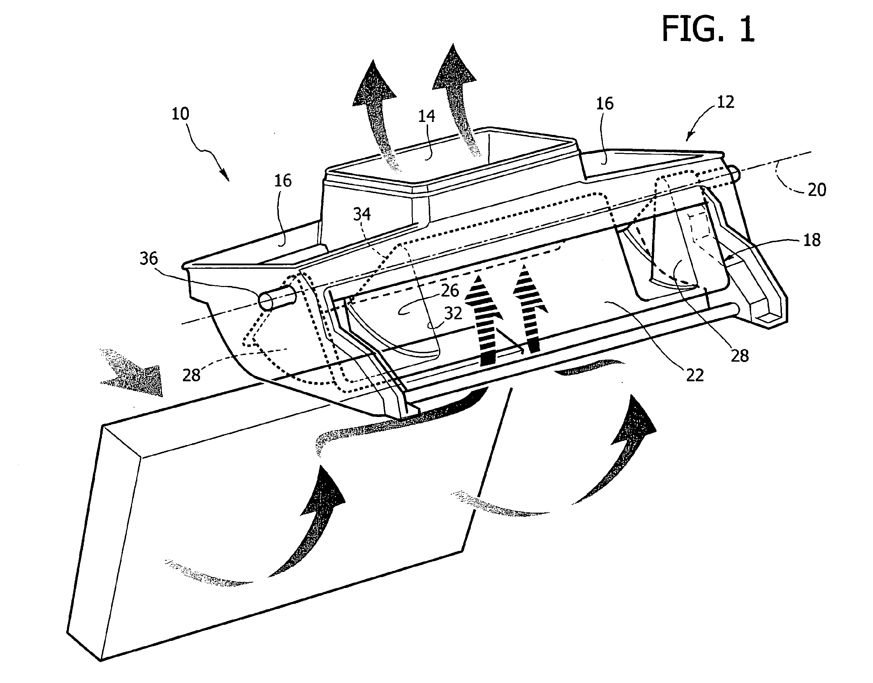

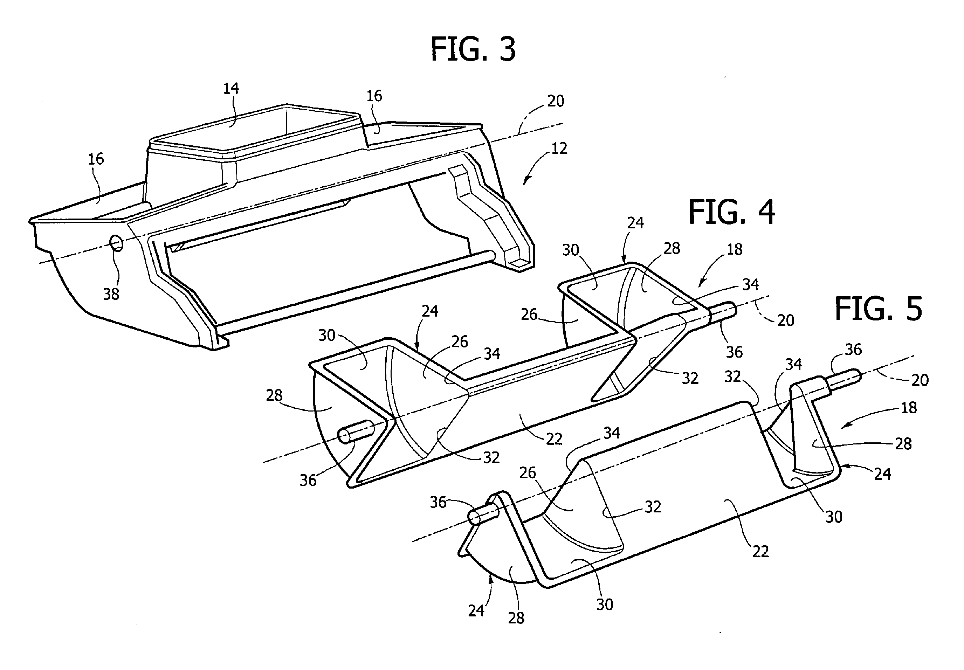

With reference to the Figures 1 - 3, the numeral 10 designates a front part of an air distribution assembly for vehicles according to the present invention. The part 10 of the distribution assembly comprises a stationary support 12 fastened to the front part of a case of an air treatment and distribution assembly. The support 12, shown by itself in Figure 3, comprises a body made of injection moulded plastic material including a central opening 14 for the exit of a first air flow and two lateral openings 16 positioned at opposite parts relative to the central opening 14 and immediately adjacent the central opening 14. The three openings 14, 16, are mutually aligned along a transverse direction with reference to the position in which the air distribution assembly is mounted on the vehicle.

With reference to Figures 1 through 5, the stationary support 12 bears a valve element 18 that is rotatable around a transverse axis 20. The valve element 18 is constituted by a single monolithic body of injection-moulded plastic material. The body 18 comprises a planar wall 22 with substantially rectangular shape having one its greater sides parallel and substantially aligned to the transverse axis of articulation 20.

The valve element 18 comprises two cylindrical sectors 24 positioned at opposite parts of the planar wall 22. Each of the two cylindrical sectors 24 has an inner wall 26, an outer wall 28 and a curved wall 30. The curved wall 30 has cylindrical shape with its centre on the axis of articulation 20. The cylindrical sectors 24 are integrally formed with the central wall 22, preferably by injection moulding. The two cylindrical sectors 24 have respective openings 32, 34 contained in respective planes, inclined relative to each other by an acute angle and converging on the axis of rotation 20. The openings 32, 34 have substantially rectangular shape, with one side parallel and substantially aligned to the axis of rotation 20. The plane containing the openings 32 is coplanar to the flat wall 22. The angle between the planes containing the openings 32, 34 is substantially equally to the maximum angular oscillation of the valve element 18 around the axis 20.

The valve element 18 is provided with two integral pivot pins 36 aligned to the axis of rotation 20 and engaging respective holes 38 (Figure 3) of the case 12. The valve element 18 is movable relative to the case 12 between two extreme positions shown in Figures 4 and 5.

With reference to Figures 1 and 5, in the first operative position the cylindrical sectors 24 obstruct the passage of the air flow through the lateral openings 16 whilst the central wall 22 of the valve element 18 does not obstruct the passage of the air flow through the central opening 14. In this operative condition, all of the air flow conveyed towards the case 12 exits through the central opening 14.

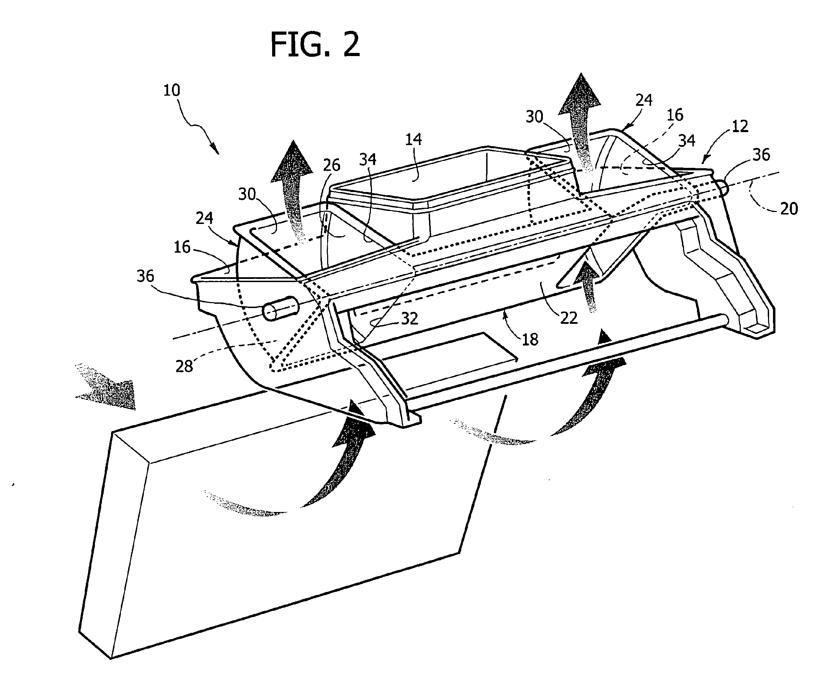

In a second operative position shown in Figures 2 and 4, the central part 22 of the valve element 18 obstructs the passage of the air flow through the central opening 14. The two cylindrical sectors 24 are so arranged that the air flow conveyed towards the case 12 enters the openings 32 and exits through the openings 34 of the cylindrical sectors 24.

The cylindrical sectors 24, depending on the angular position of the valve element 18, serve as shut-off elements or as guides for conveying the air flow through the openings 16 of the case 12. Varying the angular position of the valve element 18, it is also possible to vary the direction of exit of the air flow through the openings 16, to direct the flow of air towards different distribution conduits.

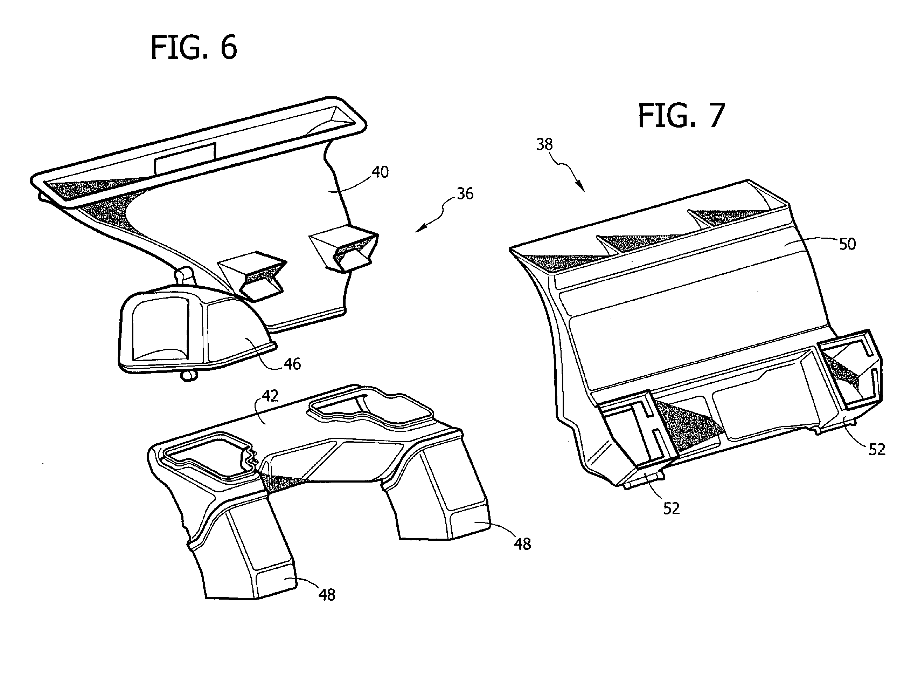

The solution according to the present invention is suitable for the construction of modular air treatment assemblies, adaptable to different vehicle models. By way of example, Figures 6 and 7 show two different distribution conduits 36, 38 able to be fastened to the case 12 of the air distribution assembly according to the present invention. The distribution conduit 36 comprises a section 40 for directing the flow of air to the base of the vehicle windshield (defrost) and a section 42 with central frontal nozzles 44 and conduits 46 that convey the air flow towards the rear seats of the vehicle.

The distribution conduit 38 shown in Figure 7 comprises a section 50 for conveying the air flow to the base of the vehicle windshield and two outlets 52 for feeding front nozzles.

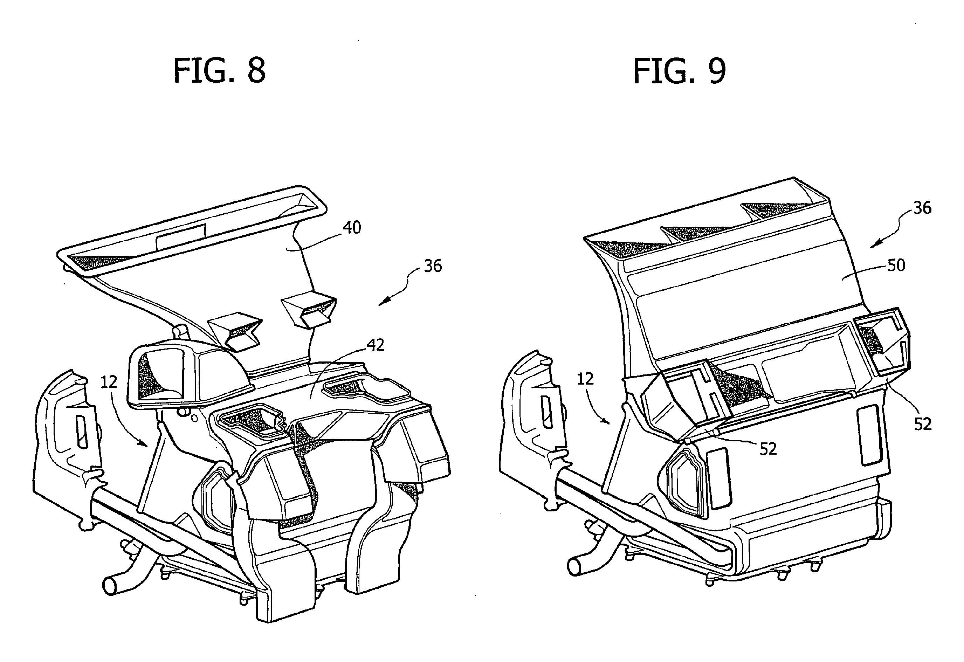

Figures 8 and 9 show two air distribution assemblies for vehicles, equipped respectively with the distribution conduits 36 and 38. Providing personalised distribution conduits according to vehicle type enables to main the general structure of the air distribution assembly 12 substantially unaltered. Personalisation according to vehicle type is obtained by changing only a reduced number of components.

The valve element 18 as described above enables to control, with a single movable element, the exit towards the windshield (defrost), the exit towards lateral frontal nozzles, the exit towards central frontal nozzles and the exit of air towards rear nozzles (if any are provided).

## Claims

1. An air distribution assembly for vehicles, comprising:
- a case (12) having a first opening (14) and two second openings (16) for the exit of the air flow, and
- a valve element (18) arranged to open and close said openings selectively,
**characterised in that** the valve element (18) comprises a single body, rotatable relative to the case (12) around an axis (20) and having a central wall (22) positioned to open and close the passage of the air flow through the first opening (14) and two cylindrical sectors (24) positioned at opposite sides of said central wall (22) and arranged to open and close the passage of the air flow through said second openings (16), said cylindrical sectors (24) being provided with first and second openings (32, 34) positioned in respective planes converging on said axis of rotation (20) and forming an acute angle between them.

2. Air distribution assembly as claimed in claim 1, **characterised in that** each of said cylindrical sectors (24) has an inner wall (26), an outer wall (28) and a curved wall (30) having the shape of a cylinder sector.

3. Air distribution assembly as claimed in claim 2, **characterised in that** the first openings (32) of said cylindrical sectors (24) are coplanar with said central wall (22).

4. Air distribution assembly as claimed in claim 1, **characterised in that** the second openings (16) of the case (12) are immediately adjacent and situated at opposite parts of said central opening (14).
